# EUROPEAN PATENT APPLICATION

(11) **EP 3 407 651 A1**
(43) Date of publication of application: **28.11.2018**
(21) Application number: 16885995.7
(22) Date of filing: 15.08.2016
(51) Int. Cl.: H04W 72/02, H04W 88/06, H04W 72/12, H04W 72/04

(54) **MODE CONTROL METHOD AND APPARATUS FOR MULTI-MODE TERMINAL, AND MULTI-MODE TERMINAL**

(30) Priority: 19.01.2016 CN 201610032743
(71) Applicant: ZTE Corporation, Shenzhen, Guangdong 518057 (CN)
(72) Inventor: LI, Hua, Shenzhen Guangdong 518057 (CN)
(74) Representative: HGF Limited
(86) International application number: PCT/CN2016/095342
(87) International publication number: WO 2017/124735

(57) **Abstract**

Provided are a mode control method and apparatus for a multi-mode terminal, and a multi-mode terminal. The method includes: when a second communication mode group is opened while a first communication mode group is working, increasing a transmission power of the first communication mode group; arranging the second communication mode group to work at a corresponding working frequency when a received signal strength of the second communication mode group reaches a set strength value; and enabling the first communication mode group to adjust the transmission power of the first communication mode group according to a received signal strength of the first communication mode group.

## Description

### Technical Field

The present application relates, but is not limited, to the technical field of communications, and more particularly to a mode control method and apparatus for a multi-mode terminal, and a multi-mode terminal.

### Background

At present, many communication terminals may support multiple different communication mode groups to work simultaneously, such as Long Term Evolution (LTE) and Wireless Fidelity (WiFi). When two communication mode groups work simultaneously, they may interfere with each other, resulting in performance degradation. There are many combinations of working modes between the two communication mode groups due to different working modes and frequencies, and the performance differences between different combinations are different.

For example, a multi-mode terminal has two different radio frequency communication mode groups: a mode group A and a mode group B. When the mode group A is working, after the mode group B is opened, it may interfere with a receiving index of the mode group A and cause the performance deterioration of the mode group A. If the index deteriorates sharply, it may cause the communication interruption of the mode group A.

In addition, after the mode group B is opened, it may work in different channels and modulation modes. Since all channel performances of a general radio frequency mode group and communication antenna within the whole working frequency range are different, there are inevitably channels with good performance and channels with poor performance. In a general communication mode, the working channel on a terminal side is randomly allocated by a base station side, so the mode group B may not work on the channel with the best performance. Therefore, it is necessary to find an optimized combination of working modes to improve the performance of multi-mode terminals.

### Summary

The following is a brief introduction for a subject described herein in detail. The brief introduction is not intended to restrict the protection scope of claims.

The embodiment of the present invention provides a mode control method and apparatus for a multi-mode terminal, and a multi-mode terminal, capable of optimizing and combining working modes of different radio frequency mode groups in a multi-mode terminal to improve the performance of the multi-mode terminal.

The mode control method for a multi-mode terminal includes:
when a second communication mode group is opened while a first communication mode group is working, increasing a transmission power of the first communication mode group;
arranging the second communication mode group to work at a corresponding working frequency when a received signal strength of the second communication mode group reaches a set strength value; and
enabling the first communication mode group to adjust the transmission power of the first communication mode group according to a received signal strength of the first communication mode group.

In an exemplary embodiment, the set strength value is a maximum value of the received signal strength of the second communication mode group.

In an exemplary embodiment, increasing a transmission power of the first communication mode group includes: when there is one first communication mode group, increasing a transmission power of the first communication mode group to a maximum value.

In an exemplary embodiment, increasing a transmission power of the first communication mode group further includes: when there are two or more first communication mode groups, increasing a transmission power of a set communication mode group in the first communication mode groups to a maximum value of the transmission power of the set communication mode group, the set communication mode group is at least one communication mode group set from the first communication mode groups that are working.

In an exemplary embodiment, a type of each communication mode group on a multi-mode terminal includes: a communication mode group of a cellular communication system, a communication mode group of a wireless local area network communication system, and a communication mode group of a mobile broadcast communication system.

The embodiment of the present invention also provides a mode control apparatus for a multi-mode terminal, which includes: a power increasing module, a frequency setting module and a power adjusting module.

The power increasing module is configured to increase, when a second communication mode group is opened while a first communication mode group is working, a transmission power of the first communication mode group.

The frequency setting module is configured to arrange the second communication mode group to work at a corresponding working frequency when a received signal strength of the second communication mode group reaches a set strength value.

The power adjusting module is configured to enable the first communication mode group to adjust the transmission power of the first communication mode group according to a received signal strength of the first communication mode group.

In an exemplary embodiment, the set strength value is a maximum value of the received signal strength of the second communication mode group.

In an exemplary embodiment, that the power increasing module increases a transmission power of the first communication mode group includes: when there is one first communication mode group, increasing a transmission power of the first communication mode group to a maximum value.

In an exemplary embodiment, that the power increasing module increases a transmission power of the first communication mode group further includes: when there are two or more first communication mode groups, increasing a transmission power of a set communication mode group in the first communication mode group to a maximum value of the transmission power of the set communication mode group, the set communication mode group is at least one communication mode group set from the first communication mode groups that are working.

In an exemplary embodiment, a type of each communication mode group on a multi-mode terminal includes: a communication mode group of a cellular communication system, a communication mode group of a wireless local area network communication system, and a communication mode group of a mobile broadcast communication system.

The embodiment of the present invention also provides a multi-mode terminal, which includes the above mode control apparatus for a multi-mode terminal.

A computer-readable storage medium stores computer-executable instructions. The computer-executable instructions are executed by a processor to implement the mode control method for a multi-mode terminal.

With the above scheme, embodiments of the present invention have the following advantages:
The mode control method and apparatus for a multi-mode terminal and the multi-mode terminal according to the embodiment of the present invention can assist the multi-mode terminal to quickly optimize and combine working modes of multiple communication mode groups, minimize mutual interference generated when two or more communication mode groups work simultaneously, and improve the performance of the multimode terminal.

### Brief Description of Drawings

FIG. 1 is a flowchart of a mode control method for a multi-mode terminal according to a first embodiment of the present invention.
FIG. 2 is a flowchart of a mode control method for a multi-mode terminal according to a second embodiment of the present invention.
FIG. 3 is another flowchart of a mode control method for a multi-mode terminal according to the second embodiment of the present invention.
FIG. 4 is a composition structure diagram of a mode control apparatus for a multi-mode terminal according to a third embodiment of the present invention.
FIG. 5 is a diagram of a combination process of alternative working modes of a multi-mode terminal according to a fifth embodiment of the present invention.

### Detailed Description

The embodiments of the present invention will be described below in detail with reference to the accompanying drawings. It should be noted that the embodiments in the present application and the features in the embodiments may be combined with each other without conflict.

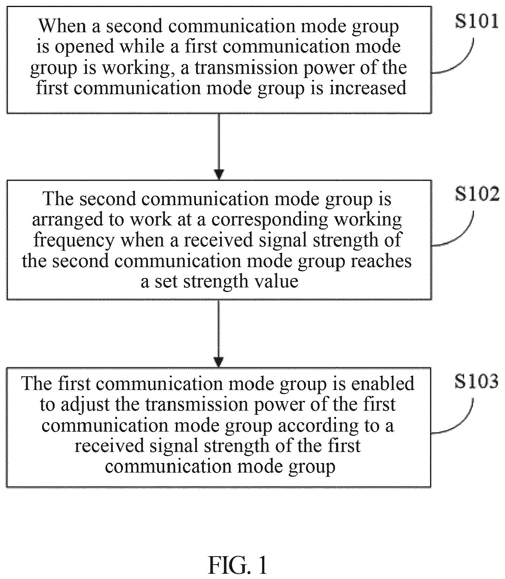

In a first embodiment of the present invention, a mode control method for a multimode terminal, as shown in FIG. 1, includes steps S101-S103.

In step S101, when a second communication mode group is opened while a first communication mode group is working, a transmission power of the first communication mode group is increased, to prevent the receiving performance of an existing communication mode group (such as the first communication mode group) from being affected by a new communication mode group (such as the second communication mode group).

In step S102, the second communication mode group is arranged to work at a corresponding working frequency when a received signal strength of the second communication mode group reaches a set strength value.

In the embodiment, the set strength value can be a maximum value of the received signal strength of the second communication mode group.

In step S103, the first communication mode group is enabled to adjust the transmission power of the first communication mode group according to a received signal strength of the first communication mode group.

In the present embodiment, the scheme can be described in detail in two cases according to the different numbers of the existing communication mode groups.
1) When there is one first communication mode group, in step S101, a transmission power of the first communication mode group is increased to a maximum value.
2) When there are two or more first communication mode groups, in step S101, a transmission power of a set communication mode group in the first communication mode group is increased to a maximum value of the transmission power of the communication mode group, the set communication mode group is at least one communication mode group set from the first communication mode groups that are working.

After the working frequency is set for the second communication mode group in step S102, the set communication mode group is enabled to adaptively adjust the transmission power of the set communication mode group according to the received signal strength of the set communication mode group.

In the present embodiment, the type of each communication mode group on the multi-mode terminal is selected from the following: a communication mode group of a cellular communication system, a communication mode group of a wireless local area network communication system, and a communication mode group of a mobile broadcast communication system.

The cellular communication system includes: 2G, 3G, and 4G communication systems such as a Global System for Mobile Communication (GSM), a Code Division Multiple Access (CDMA), a Universal Mobile Telecommunications System (UMTS), a Time Division-Synchronous Code Division Multiple Access (TDSCDMA), and an LTE.

The wireless local area network communication system includes: communication systems such as IEEE 802.11 and IEEE 802.15.

The mobile broadcast communication system includes: communication systems such as China Mobile Multimedia Broadcasting (CMMB) and Terrestrial Mobile Multimedia Broadcasting (TMMB).

In a second embodiment of the present invention, a mode control method for a multimode terminal is provided. In the present embodiment, based on the first embodiment, it is to introduce a combination process of alternative working modes of each communication mode group when a second communication mode group and a third communication mode group of a multi-mode terminal are opened in sequence while an existing first communication mode group is working. In the present embodiment, there are one first communication mode group, one second communication mode group and one third communication mode group.

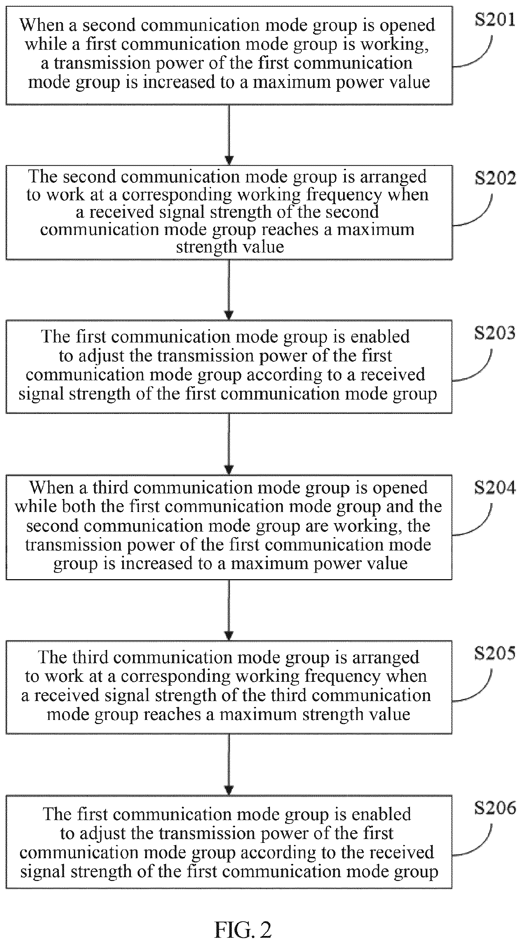

As shown in FIG. 2, the mode control method for a multimode terminal in the present embodiment includes steps S201-S206.

In step S201, when a second communication mode group is opened while a first communication mode group is working, a transmission power of the first communication mode group is increased to a maximum power value, to prevent the receiving performance of the first communication mode group from being affected by the second communication mode group.

In step S202, the second communication mode group is arranged to work at a corresponding working frequency when a received signal strength of the second communication mode group reaches a maximum strength value.

In step S203, the first communication mode group is enabled to adjust the transmission power of the first communication mode group according to a received signal strength of the first communication mode group.

In step S204, when a third communication mode group is opened while both the first communication mode group and the second communication mode group are working, the transmission power of the first communication mode group is increased to a maximum power value.

In step S205, the third communication mode group is arranged to work at a corresponding working frequency when a received signal strength of the third communication mode group reaches a maximum strength value.

In step S206, the first communication mode group is enabled to adjust the transmission power of the first communication mode group according to the received signal strength of the first communication mode group.

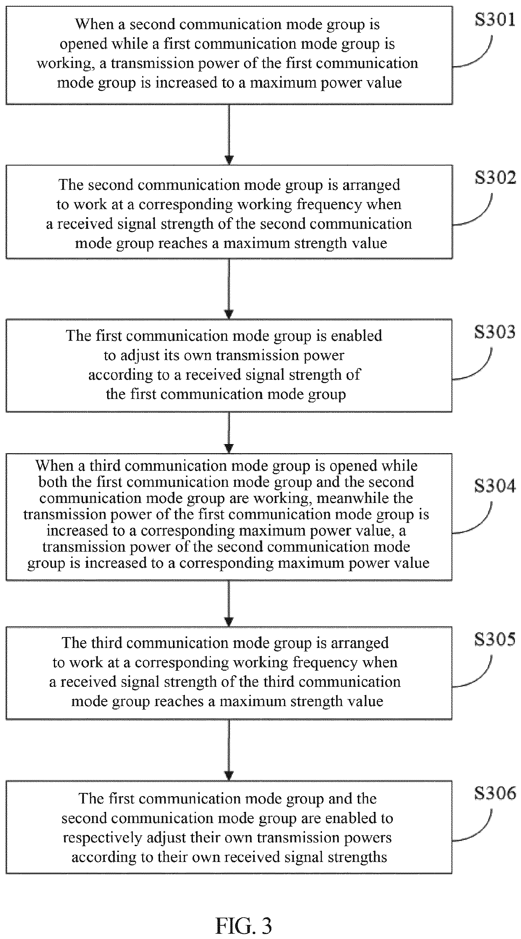

Or, as shown in FIG. 3, the method for combining alternative working modes of a multimode terminal in the present embodiment may also be executed according to steps S301-S306.

In step S301, when a second communication mode group is opened while a first communication mode group is working, a transmission power of the first communication mode group is increased to a maximum power value, to prevent the receiving performance of the first communication mode group from being affected by the second communication mode group.

In step S302, the second communication mode group is arranged to work at a corresponding working frequency when a received signal strength of the second communication mode group reaches a maximum strength value.

In step S303, the first communication mode group is enabled to adjust its own transmission power according to a received signal strength of the first communication mode group.

In step S304, when a third communication mode group is opened while both the first communication mode group and the second communication mode group are working, meanwhile the transmission power of the first communication mode group is increased to a corresponding maximum power value, a transmission power of the second communication mode group is increased to a corresponding maximum power value.

In step S305, the third communication mode group is arranged to work at a corresponding working frequency when a received signal strength of the third communication mode group reaches a maximum strength value.

In step S306, the first communication mode group and the second communication mode group are enabled to respectively adjust their own transmission powers according to their own received signal strengths.

In the embodiment, the type of each communication mode group on a multi-mode terminal may include: a communication mode group of a cellular communication system, a communication mode group of a wireless local area network communication system, and a mobile broadcast communication system.

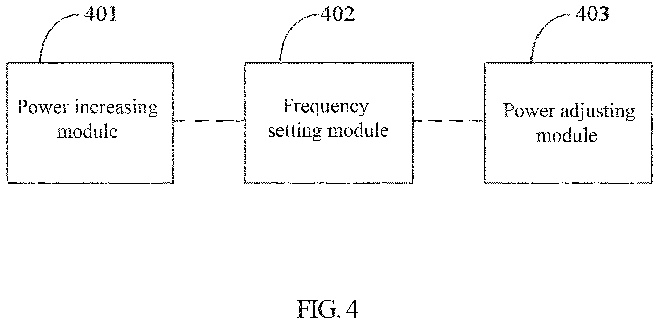

In a third embodiment of the present invention corresponds to the first embodiment, the present embodiment introduces a mode control apparatus for a multi-mode terminal. As shown in FIG. 4, the apparatus includes the following components: a power increasing module 401, a frequency setting module 402 and a power adjusting module 402.
1) The power increasing module 401 is configured to increase, when a second communication mode group is opened while a first communication mode group is working, a transmission power of the first communication mode group.
2) The frequency setting module 402 is configured to arrange the second communication mode group to work at a corresponding working frequency when a received signal strength of the second communication mode group reaches a set strength value.

In the embodiment, the set strength value can be a maximum value of the received signal strength of the second communication mode group.
3) The power adjusting module 403 is configured to enable the first communication mode group to adjust the transmission power of the first communication mode group according to a received signal strength of the first communication mode group.

In the present embodiment, the scheme can be described in detail in two cases according to different numbers of the existing communication mode groups.
1. When there is one first communication mode group, that the power increasing module 401 increases a transmission power of the first communication mode group includes: increasing a transmission power of the first communication mode group to a maximum value. 2. When there are two or more first communication mode groups, that the power increasing module 401increases a transmission power of the first communication mode group further includes: increasing a transmission power of a set communication mode group in the first communication mode group to a maximum value of the transmission power of the communication mode group, the set communication mode group is at least one communication mode group set from the first communication mode groups that are working.

The power adjusting module 403 is configured to enable, after the frequency setting module 402 sets the working frequency for the second communication mode group, the set communication mode group to adaptively adjust the transmission power of the set communication mode group according to the received signal strength of the set communication mode group.

In the present embodiment, the type of each communication mode group on the multi-mode terminal is selected from the following: a communication mode group of a cellular communication system, a communication mode group of a wireless local area network communication system, and a communication mode group of a mobile broadcast communication system.

In a fourth embodiment of the present invention, a multi-mode terminal is provided, which may be understood as a physical device, and includes the mode control apparatus for a multi-mode terminal described in the third embodiment.

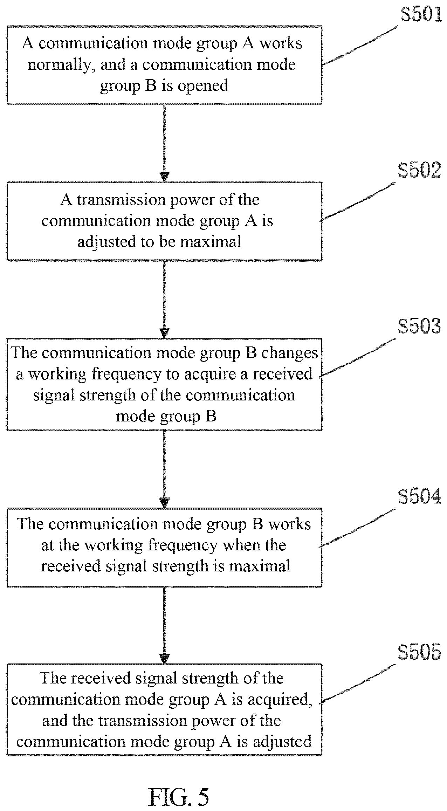

In a fifth embodiment of the present invention, based on the above embodiment, an application example of an embodiment of the present invention is introduced with reference to FIG. 5 by taking two communication mode groups as an example.

The combination of two communication mode groups in the multi-mode terminal in the present embodiment may be:
1) Communication mode groups of a dual cellular communication system, which include any two of the following communication mode groups: GSM, CDMA (cdma2000 1x), UMTS, TD-SCDMA, LTE, etc., and constitute a 2G and 3G multi-mode terminal, 3G and 3G multi-mode terminal, 3G and 4G multi-mode terminal, etc.
2) Communication mode groups of a cellular communication system and a wireless local area network communication system, such as GSM and WiFi, CDMA (cdma2000 1x) and WiFi.
3) Communication mode groups of a cellular communication system and a mobile broadcast communication system, such as GSM and IEEE 802.15, CDMA (cdma2000 1x) and IEEE 802.15, and TD-SCDMA and CMMB/TMMB.
4) Communication mode groups of a wireless local area network communication system and a mobile broadcast communication system, such as IEEE802.11 and IEEE 802.15.

As shown in FIG. 5, the combination process of alternative working modes of a multi-mode terminal in the present embodiment includes steps S501-S505.

In step S501, a communication mode group A works normally, and a communication mode group B is opened.

It is assumed that the communication mode group A is a GSM communication mode group, and the communication mode group B is a WiFi communication mode group. When the communication mode group A works normally, an appropriate power may be transmitted according to a received signal strength. The communication mode group B may be manually opened by a switch option of the multi-mode terminal, or may be automatically opened by software.

In step S502, a transmission power of the communication mode group A is adjusted to be maximal.

In the embodiment, the transmission power of the communication mode group A can be adjusted to be maximal. Firstly, the purpose is to prevent the performance of the communication mode group A from deteriorating after the two communication mode groups interfere with each other, and to prevent partial functions of the communication mode group A from deteriorating or missing. For example, when the communication mode group A is making a GSM voice call, the receiving signal is strong and the transmitting power is not high. After the communication mode group B is opened, the receiving performance of the communication mode group A drastically deteriorates, and the call may be interrupted under the original transmitting power. Secondly, the communication mode group A has the greatest interference with the communication mode group B under the maximum transmission power, so the working frequency of the communication mode group B selected under this condition has the highest reliability.

In step S503, the communication mode group B changes a working frequency to acquire a received signal strength of the communication mode group B under a different operating frequency.

It should be noted that when the communication mode group B accesses the WiFi communication mode group, it does not immediately work fixedly at the accessed frequency, but makes a working frequency change request to the system, and acquires the received signal strength of the communication mode group B at each working frequency.

In step S504, the communication mode group B works at the working frequency when the received signal strength is maximal.

In step S505, the received signal strength of the communication mode group A is acquired, and the transmission power of the communication mode group A is adjusted.

After the working frequency of the communication mode group B is fixed, the communication mode group A is no longer constrained to transmit with the maximum power, and the transmission power of the communication mode group A is adjusted according to the received signal strength, thus the transmission power consumption of the multi-mode terminal may be reduced.

The mode control method and apparatus for a multi-mode terminal and the multi-mode terminal according to the embodiments of the present invention can assist the multi-mode terminal to quickly optimize and combine working modes of multiple communication mode groups, minimize mutual interference generated when two or more communication mode groups work simultaneously, and improve the performance of the multimode terminal.

A computer-readable storage medium stores computer-executable instructions. The computer-executable instructions are executed by a processor to implement the mode control method for a multi-mode terminal.

Those of ordinary skill in the art may understand that all or some of the steps in the above-mentioned embodiments may be implemented by using a computer program flow. The computer program may be stored in a computer-readable storage medium. The computer program is executed on a corresponding hardware platform (such as system, device, apparatus and instrument). During execution, the computer program includes one or a combination of the steps of the method embodiment.

Alternatively, all or some of the steps in the above-mentioned embodiments may also be implemented by using an integrated circuit. These steps may be manufactured into integrated circuit modules respectively, or multiple modules or steps therein are manufactured into a single integrated circuit module for implementing.

Devices/function modules/function units in the above-mentioned embodiment may be implemented by using a general computation device. They may be centralized on a single computation device or may be distributed on a network composed of multiple computation devices.

When being implemented in a form of software function module and sold or used as an independent product, a device/function module/function unit in the above-mentioned embodiment may be stored in a computer-readable storage medium. The above-mentioned computer-readable storage medium may be a read-only memory, a magnetic disk or an optical disk, etc.

Through the description of the embodiments, means and effects of the embodiments of the present invention for achieving the intended purpose should be understood deeply. However the accompanying drawings are only for the purpose of reference and description, and are not used for limiting the embodiments of the present invention.

### Industrial Applicability

The mode control method and apparatus for a multi-mode terminal and the multi-mode terminal according to the embodiment of the present invention can assist the multi-mode terminal to quickly optimize and combine working modes of multiple communication mode groups, minimize mutual interference generated when two or more communication mode groups work simultaneously, and improve the performance of the multimode terminal.

## Claims

1. A mode control method for a multi-mode terminal, comprising:
when a second communication mode group is opened while a first communication mode group is working, increasing a transmission power of the first communication mode group;
arranging the second communication mode group to work at a corresponding working frequency when a received signal strength of the second communication mode group reaches a set strength value; and
enabling the first communication mode group to adjust the transmission power of the first communication mode group according to a received signal strength of the first communication mode group.

2. The mode control method for a multi-mode terminal according to claim 1, wherein the set strength value is a maximum value of the received signal strength of the second communication mode group.

3. The mode control method for a multi-mode terminal according to claim 1, wherein increasing a transmission power of the first communication mode group comprises: when there is one first communication mode group, increasing a transmission power of the first communication mode group to a maximum value.

4. The mode control method for a multi-mode terminal according to claim 1, wherein increasing a transmission power of the first communication mode group further comprises: when there are two or more first communication mode groups, increasing a transmission power of a set communication mode group in the first communication mode groups to a maximum value of the transmission power of the set communication mode group, the set communication mode group is at least one communication mode group set from the first communication mode groups that are working.

5. The mode control method for a multi-mode terminal according to any one of claims 1 to 4, wherein
a type of each communication mode group on a multi-mode terminal comprises: a communication mode group of a cellular communication system, a communication mode group of a wireless local area network communication system, and a communication mode group of a mobile broadcast communication system.

6. A mode control apparatus for a multi-mode terminal, comprising: a power increasing module, a frequency setting module and a power adjusting module, wherein
the power increasing module is configured to increase, when a second communication mode group is opened while a first communication mode group is working, a transmission power of the first communication mode group;
the frequency setting module is configured to arrange the second communication mode group to work at a corresponding working frequency when a received signal strength of the second communication mode group reaches a set strength value; and
the power adjusting module is configured to enable the first communication mode group to adjust the transmission power of the first communication mode group according to a received signal strength of the first communication mode group.

7. The mode control apparatus for a multi-mode terminal according to claim 6, wherein the set strength value is a maximum value of the received signal strength of the second communication mode group.

8. The mode control apparatus for a multi-mode terminal according to claim 6, wherein that the power increasing module increases a transmission power of the first communication mode group comprises: when there is one first communication mode group, increasing a transmission power of the first communication mode group to a maximum value.

9. The mode control apparatus for a multi-mode terminal according to claim 6, wherein that the power increasing module increases a transmission power of the first communication mode group further comprises: when there are two or more first communication mode groups, increasing a transmission power of a set communication mode group in the first communication mode group to a maximum value of the transmission power of the set communication mode group, the set communication mode group is at least one communication mode group set from the first communication mode groups that are working.

10. The mode control apparatus for a multi-mode terminal according to any one of claims 6 to 9, wherein a type of each communication mode group on a multi-mode terminal comprises: a communication mode group of a cellular communication system, a communication mode group of a wireless local area network communication system, and a communication mode group of a mobile broadcast communication system.

11. A multi-mode terminal, comprising the mode control apparatus for a multi-mode terminal according to any one of claims 6 to 10.

12. A computer-readable storage medium, storing computer-executable instructions, which, when executed by a processor, implement the mode control method for a multi-mode terminal according to any one of claims 1 to 5.
